# EUROPEAN PATENT APPLICATION

(11) **EP 4 435 715 A1**
(43) Date of publication of application: **25.09.2024**
(21) Application number: 23163378.5
(22) Date of filing: 22.03.2023
(51) Int. Cl.: G06T 7/00

(54) **A METHOD FOR DIAGNOSING A LUNG CANCER USING AI ALGORITHM**

(71) Applicant: Image Intelligence Technologies, S.L., 08007 Barcelona (ES)
(72) Inventor: MEZHEYEUSKI, Artur, CP 08007 Barcelona (ES); ASMALOUSKI, Vadzim, CP 08007 Barcelona (ES); SHULTSEV, Oleg, CP 08007 Barcelona (ES); PETROVS, Vladimirs, CP 08007 Barcelona (ES); MICKE, Patrick, 756 47 Uppsala (SE); HRYNCHYK, Ina, CP 08007 Barcelona (ES); MALASHENKA, Dzmitry, CP 08007 Barcelona (ES); JELISEJEVS, Sergejs, CP 08007 Barcelona (ES)
(74) Representative: AAA Law

(57) **Abstract**

Invention relates to a method for diagnosing a lung cancer. The method comprises the following steps: (a) acquisition of a pathology image of a tissue sample from a patient, wherein the tissue sample is a biopsy sample; (b) digitalization of the pathology image by means of a digital slide scanner, wherein the digitalized image resolution is about 20x to 40x magnification, which corresponds to pixel sizes of about 0.5 to 0.25 micrometres; and (c) analysis of the digitalized pathology image using an AI algorithm to identify and classify pathology features of the tissue samples in the digitalized pathology image.

## Description

### Field of the invention

Invention relates to methods for diagnosing a lung cancer.

### Background of the invention

European patent application publication No. EP4111977 discloses Concepts for generating a dark X-ray (DAX) model adapted to represent relations between a DAX signal, a respiratory state, and a respiratory disease grade, as well as concepts for using the DAX model are proposed. In particular, as relations between these variables are modelled, the difference between a DAX signal of a subject at a respiratory state, compared to a DAX signal of a subject at a reference respiratory state may be assessed.

European patent application publication No. EP4134972 discloses a system and related method for imaging support. The system comprises an input interface for receiving an input image of a patient acquired by an imaging apparatus. The input image was previously assessed by an image quality assessment module and was awarded an image quality, IQ, score. The system's imaging triaging logic retrieves from an image database of prior assessed images, a corresponding image that corresponds to the input image. The corresponding image is a prior image of patient. The imaging triaging logic provides a decision, based on the first IQ score and a second IQ score of the corresponding image, if any, whether or not to acquire a new image of the patient by the imaging apparatus.

International application publication No. WO2023011936 discloses a system and method are provided for determining histological nature and medical treatment for lesions seen on medical images of a patient. The method includes detecting a lesion in a medical image; extracting image findings from a radiology report describing the lesion using NLP; retrieving demographic and clinical data of the patient from a database; identifying similar patients based on the demographic and clinical data; creating a similar patient cohort by aggregating data from the identified similar patients, where the aggregated data includes demographic data, clinical data and medical images of the similar patients; retrieving the medical images from the similar patient cohort; performing radiomics-derived quantitative analysis on the retrieved medical images to train an ANN classification model; applying the lesion to the trained ANN classification model to predict histological nature of the lesion; and determining diagnosis and medical treatment of the patient based on the predicted histological nature.

European patent application publication No. EP4134977 discloses a method for predicting radiologic findings. The method comprises obtaining, by a machine-learning model, text data representing at least one radiologic finding relating to a patient and, optionally, text data from an electronic medical record of the patient, and generating, by the machine-learning model, at least one predicted additional radiologic finding relating to the patient. The machine-learning model has been trained using training data, the training data comprising text data from radiology reports and text data from electronic medical records of a plurality of patients.

### Summary of the invention

Method utilizes artificial intelligence (AI) system, based on neural network digital pathology platforms trained on digitalized biopsy samples and manual expert annotations. AI-system is intended to be used in parallel and in addition to the established traditional pathology diagnostic workflows for lung cancer diagnoses through three use cases: 1. Performing `first read' to detect cancer: shortening turnaround time for pathologists and subsequently for treatment decision making 2. Performing quality control and reducing error rates through `second read' - post-diagnosis screening (after pathologist) for an alert if missed cancer is detected; and 3. Performing fully automated screening: pathologist is alerted only to confirm cancer if highly-suspicious lesion is detected by AI-system. An additional application is based on an 'all-in-one-box' solution, which includes a slide scanner, AI platform, an user interface (UI), and computation hardware. This solution is independent of local clinical organization infrastructure and can function as a standalone system.

The present invention relates to the methods of development and setup of AI-based diagnostic system for cancer detection and diagnostics and system operating principles, workflow, interface design for the clinical and research use purposes.

The existing two main areas of AI-based histology image analysis systems (hereinafter referred to as AIHS) are conventionally divided into basic and advanced.

Basic analysis aim to accelerating, automating, and improving the accuracy of diagnostic elements or other elements of histopathology analysis including but not limited to tissue quality control, tissue type annotation, nuclei segmentation and classification, quantitative evaluation of the molecular markers that currently require high working-hours of highly qualified personnel (at the same time, there is a significant shortage of pathologists in many countries).

Advanced analysis is the use of AIHS in areas outside the traditional area of expertise of the pathologist. For example, the use of AIHS to predict the presence of a mutation in tumour cells or to assess the risk of disease progression, metastases, etc. Despite the high scientific interest in such an application, its relevance seems doubtful against the backdrop of the development and reduction in the cost of DNA/RNA analysis methods.

AIHS does not imply changes in treatment protocols, does not require multi-centre validation of fundamentally new classification systems. At the same time, AIHS in such a scheme is easier to integrate into the existing theoretical and practical scheme of medical care, biobanking and biomedical research workflows. An example of a basic direction (also considered as a justification for the scope of the invention): classification of prostate cancer by levels of "aggressiveness" (Gleason grading) - performed faster than by a person (staff) with comparable quality. The choice of treatment depends on the correct classification. Hence, AI can efficiently accomplish tasks that typically demand substantial time and resources from a specialist. There are two main approaches to developing AIHS: highly annotated and weakly-annotated. Weakly-annotated approach: the system is trained on a set of images that have only a common label of belonging to a class, for example: "cancer-not cancer". Such systems do not require the expense of manual image annotation which is the main bottleneck of most developers, but they are sensitive to image quality and usually perform well only within the training sample. Another systemic disadvantage is the "black box": it is not clear how the system makes decisions, and it is not clear where there may be weaknesses. Regulators in the many Regions are generally wary of such systems.

Highly annotated approach: the image is divided into separate objects (e.g., cells, cell types, glands, vessels), the relationship between which is then analysed, simulating the pathologist's decision-making process. The problem with this approach is that it requires extensive annotations what must be manually provided by an expert and classified to train the model. Thus, the approach in the development of this invention is made in favour of highly annotated approach. The technology is an applied solution in Image Processing and allows us to effectively train artificial intelligence module (neural network) with the best performance. Feature of the technology is that Image Augmentation solutions are traditionally used for the training stages of neural networks, but invented methodology use the technology for training and development - to solve the problems of data balance in datasets. Image normalization ensures the system works in the system workflow - to allow for optimization of tile creating when working with a large image, to reduce usage of computing power (processing speed and efficiency).

Machine learning models require large amounts of high-quality data for effective training. However, collecting and labelling such data is often expensive and time-consuming. Data augmentation techniques have been developed to increase the amount and variety of training data without additional labelling efforts. However, existing data augmentation methods have limitations in their effectiveness and efficiency.

The system for data argumentation in neural network training consists of a computer program and hardware capable of performing the described methods The developed data argumentation methodology consists of 16 different types of augmentation instruments and methods, each with specified parameters and settings. The processing of augmentation utilizes CPU computing power to increase epoch time, which is defined as the total number of iterations of all the training data in one cycle for training the machine learning model. The many iterations of augmentation performed during neural network training enable the AI-based system to recognize slides from different scanners, with different qualities and colours, providing independence from the infrastructure and specific hardware for incoming data and as result - to use system in clinic organization with different digitalization infrastructure.

The system utilizes a computer vision annotation tool and open slide server library modified for labelling slides without losing quality. To visualize, understand and analyse training performance, the system displays what the neural network model has found on the entire slide with a colour map. Additionally, the colour map displays annotations, which are the labelling data themselves. This method provides a comparative analysis of the model's performance with statistical analysis, allowing for the recognition of problematic spots on the slide. The colour map provides a visual representation of the training performance, making it easier for users to identify errors and make improvements.

The system utilizes 16 different types of augmentation instruments and methods, each with specified parameters and settings. The augmentation methods include downscale; blur; elastic transform; vertical flip; horizontal flip; rotate; grid distortion; HSF; optical distortion; image compression; RGB shift; Gauss noise; random brightness contrast; multiplicative noise; motion blur; random fog. For each augmentation method specified parameters is set. These methods provide variations to the training data, increasing the variety and amount of data without additional labelling efforts.

The present method and system for data argumentation in neural network training, which increases the variety and amount of training data without additional labelling efforts. The system utilizes 16 different types of augmentation instruments and methods, with specified parameters, which set the settings, limits and intervals of values of the augmentation technique, that make it possible to achieve the necessary for data augmentation for training the model; and performs augmentation using CPU computing power. The system also utilizes a computer open-source vision annotation tool which is used for labelling data for computer vision algorithms, and OpenSlide server library modified for labelling slides without losing quality. The colour map display provides a comparative analysis of the model's performance with statistical analysis, allowing for the recognition of problematic spots on the slide. The present invention provides an effective and efficient method for improving the training of machine learning models to develop AI based system for cancer diagnostics.

### Brief description of the drawings

The drawings illustrate generally, by way of example, but not by way of limitation, various embodiments of the invention.
Fig. 1 is a block scheme of an augmentation pipeline.

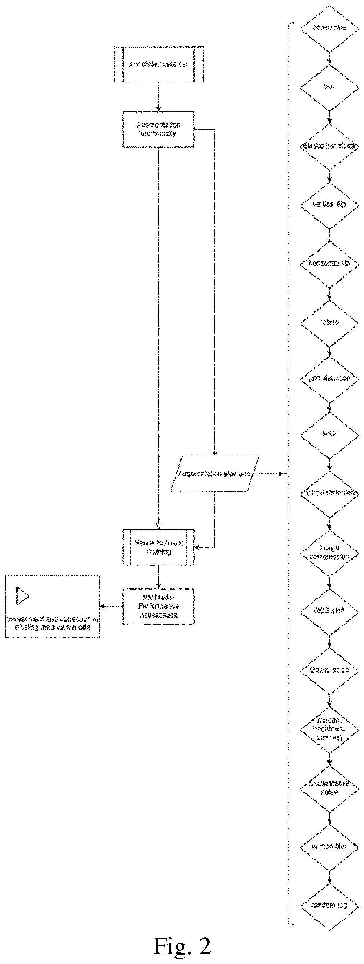

Fig. 2 is a block scheme of a method for diagnosing a lung cancer.

### Detailed description of the embodiments

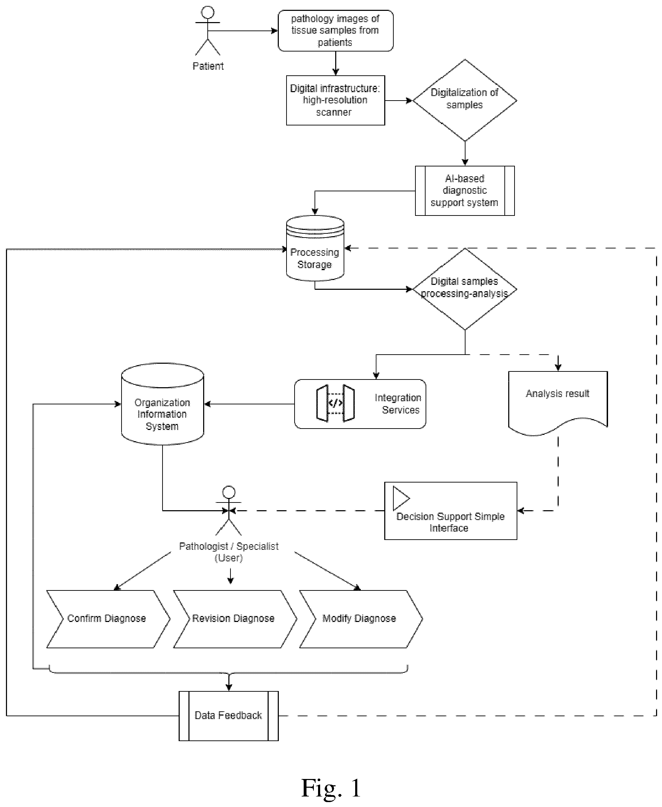

Augmentation pipeline as illustrated in Fig. 1 utilize 16 different types of augmentation instruments and methods, each with specified parameters and settings, to create variations in the training data.

Downscale function decreases image quality by downscaling and upscaling back. Downscale function comprises the following parameters:
∘ Always apply=False,
∘ p=1.0,
∘ scale min=0.25
∘ scale max=0.9900000095367432, interpolation=4

This code defines a function for downscaling an image. The function has several parameters:
- always_apply: a boolean value indicating whether the function should always be applied, regardless of other conditions.
- p: a float value indicating the probability of the function being applied.
- scale_min: a float value indicating the minimum scale factor to use when downscaling the image.
- scale_max: a float value indicating the maximum scale factor to use when downscaling the image.
- interpolation: an integer value indicating the type of interpolation to use when downscaling the image.

Blur transforms function blurs the input image using a Generalized Normal filter with a randomly selected parameter. This transform also adds multiplicative noise to generated kernel before convolution. It includes the following parameters:
∘ always_apply=False,
∘ p=1.0,
∘ blur_limit=(1, 3)

This code defines a function for blurring an image. The function has several parameters:
- always_apply: a boolean value indicating whether the function should always be applied, regardless of other conditions
- p: a float value indicating the probability of the function being applied
- blur_limit: a tuple of two integer values indicating the range of blur kernel sizes to use when blurring the image.

Elastic Transform function is a method that uses both local distortion and random affine transformation. These transformations use anti-aliasing for high-quality output. It includes the following parameters:
∘ always_apply=False,
∘ p=1.0,
∘ alpha=0.6699999570846558,
∘ sigma=6.710000038146973,
∘ alpha_affine=9.399999618530273,
∘ interpolation=4,
∘ border_mode=4,
∘ value=(0, 0, 0),
∘ mask_value=None,
∘ approximate=False.

Elastic Transform function code defines a function for applying an elastic transformation to an image. The function has several parameters:
- always_apply: a boolean value indicating whether the function should always be applied, regardless of other conditions;
- p: a float value indicating the probability of the function being applied;
- alpha: a float value indicating the strength of the deformation field;
- sigma: a float value indicating the smoothness of the deformation field;
- alpha_affine: a float value indicating the strength of the affine transformation;
- interpolation: an integer value indicating the type of interpolation to use when transforming the image;
- border_mode: an integer value indicating the type of border mode to use when transforming the image;
- value: a tuple of three integer values indicating the RGB color value to use for padding the image if border _mode is set to 'constant';
- mask_value: a float value indicating the value to use for padding the mask image if a mask is provided;
- approximate: a boolean value indicating whether to use an approximate method for the elastic transformation.

Vertical Flip function is a technique that takes both rows and columns of such a matrix and flips them vertically. As a result, an image flipped upside down along the x-axis. Special parameters of this techniques are as follows:
∘ always_apply=False,
∘ p=1.0.

This code defines a function for flipping an image vertically. The function has two parameters:
- always_apply: a boolean value indicating whether the function should always be applied, regardless of other conditions;
- p: a float value indicating the probability of the function being applied.

Horizontal Flip function takes both rows and columns of such a matrix and flips them horizontally. As a result, you will get an image flipped horizontally along the y-axis. Special parameters of this function are as follows:
∘ always_apply=False,
∘ p=1.0.

This code defines a function for flipping an image horizontally. The function has two parameters:
- always_apply: a boolean value indicating whether the function should always be applied, regardless of other conditions;
- p: a float value indicating the probability of the function being applied.

Rotate function is a technique used to randomly rotate an image clockwise or counterclockwise by a certain number of degrees. As the transformation result, updated image with the changed position of the objects in the frame. It includes the following parameters:
∘ always_apply=False,
∘ p=1.0, limit=(-90, 90),
∘ interpolation=0,
∘ border_mode=4,
∘ value=(0, 0, 0),
∘ mask_value=None.

This code defines a function rotates an image by a random angle within a specified range. The function has several parameters:
- always_apply: a boolean value indicating whether the function should always be applied, regardless of other conditions
- p: a float value indicating the probability of the function being applied
- limit: a tuple of two integer values indicating the range of angles in degrees to randomly select from
- interpolation: an integer value indicating the type of interpolation to use when transforming the image
- border_mode: an integer value indicating the type of border mode to use when transforming the image
- value: a tuple of three integer values indicating the RGB color value to use for padding the image if border_mode is set to 'constant'
- mask_value: a float value indicating the value to use for padding the mask image if a mask is provided.

Grid Distortion function include image warping technique which is driven by the mapping between equivalent families of curves, arranged in a grid structure. Until recently only curve sets arranged in a regular rectangular grid were considered. This function includes the following parameters:
∘ always_apply=False,
∘ p=1.0,
∘ num_steps=5,
∘ distort_limit=(-0.10000001192092896, 0.10000001192092896),
∘ interpolation=0,
∘ border_mode=4,
∘ value=(0, 0, 0),
∘ mask_value=None.

This code defines a function for applying grid distortion to an image. The function has several parameters:
- always_apply: a boolean value indicating whether the function should always be applied, regardless of other conditions
- p: a float value indicating the probability of the function being applied
- num_steps: an integer value indicating the number of steps to take when distorting the grid
- distort_limit: a tuple of two float values indicating the maximum amount of distortion to apply to the grid
- interpolation: an integer value indicating the type of interpolation to use when transforming the image
- border_mode: an integer value indicating the type of border mode to use when transforming the image
- value: a tuple of three integer values indicating the RGB color value to use for padding the image if border_mode is set to 'constant'
- mask_value: a float value indicating the value to use for padding the mask image if a mask is provided.

Hue Saturation Value function randomly changes hue, saturation, and value (HSV) of the input image. This function includes the following parameters:
∘ always_apply=False,
∘ p=1.0,
∘ hue_shift_limit=(-20,23),
∘ sat_shift_limit=(-30, 30),
∘ val_shift_limit=(-20, 20).

This code defines a function for adjusting the hue, saturation, and value (brightness) of an image. The function has several parameters:
- always_apply: a boolean value indicating whether the function should always be applied, regardless of other conditions
- p: a float value indicating the probability of the function being applied
- hue_shift_limit: a tuple of two integer values indicating the range of hue shift to apply to the image
- sat_shift_limit: a tuple of two integer values indicating the range of saturation shift to apply to the image
- val_shift_limit: a tuple of two integer values indicating the range of value (brightness) shift to apply to the image.

Optical Distortion function includes a rotationally symmetric image error which increases from the centre of the image towards the image margin. There is a local modification of the image scale within the image plane, which can be very disturbing for measuring applications. This function includes the following parameters:
∘ always_apply=False,
∘ p=1.0,
∘ distort_limit=(-0.10000001192092896, 0.10000001192092896),
∘ shift_limit=(-0.05000000074505806, 0.05000000074505806),
∘ interpolation=0,
∘ border_mode=4,
∘ value=(0, 0, 0),
∘ mask_value=None

This code defines a function for adjusting the hue, saturation, and value (brightness) of an image. The function has several parameters:
- always_apply: a boolean value indicating whether the function should always be applied, regardless of other conditions
- p: a float value indicating the probability of the function being applied
- distort_limit: a tuple of two float values indicating the maximum and minimum amount of distortion to apply to the image
- shift_limit: a tuple of two float values indicating the maximum and minimum amount of shift to apply to the image
- interpolation: an integer value indicating the interpolation method to use when applying the distortion
- border_mode: an integer value indicating the border mode to use when applying the distortion
- value: a tuple of three integer values indicating the value to use for padding when applying the distortion
- mask_value: a float value indicating the value to use for the mask when applying the distortion.

Image Compression function decreases image quality by Jpeg, WebP compression of an image. This function includes the following parameters:
∘ always_apply=False,
∘ p=1.0,
∘ quality _lower=80,
∘ quality_upper=100,
∘ compression_type=0

This code defines a function for compressing an image. The function has several parameters:
- always_apply: a boolean value indicating whether the function should always be applied, regardless of other conditions
- p: a float value indicating the probability of the function being applied
- quality_lower: an integer value indicating the lower bound of the quality range to use when compressing the image
- quality_upper: an integer value indicating the upper bound of the quality range to use when compressing the image
- compression_type: an integer value indicating the type of compression to use when compressing the image.

RGB shift function randomly shifts values for each channel of the input RGB image. This function includes the following parameters:
∘ always_apply=False,
∘ p=1.0,
∘ r_shift_limit=(-20, 20),
∘ g_shift_limit=(-20,20),
∘ b_shift_limit=(-20, 20)

This code defines a function for shifting the colors of an RGB image. The function has several parameters:
- always_apply: a boolean value indicating whether the function should always be applied, regardless of other conditions
- p: a float value indicating the probability of the function being applied
- r_shift_limit: a tuple of two integers indicating the range of values to shift the red channel by
- g_shift_limit: a tuple of two integers indicating the range of values to shift the green channel by
- b_shift_limit: a tuple of two integers indicating the range of values to shift the blue channel by.

Gauss Noise function applies gaussian noise to the input image. This function includes the following parameters:
∘ always_apply=False,
∘ p=1.0,
∘ var_limit=(0.0, 199.6599884033203)

This code defines a function for adding Gaussian noise to an image. The function has several parameters:
- always_apply: a boolean value indicating whether the function should always be applied, regardless of other conditions
- p: a float value indicating the probability of the function being applied
- var_limit: a tuple of two float values indicating the lower and upper bounds of the variance of the Gaussian distribution used to generate the noise.

Random Brightness Contrast function randomly changes brightness and contrast of the input image. This function includes the following parameters:
∘ always_apply=False,
∘ p=1.0,
∘ brightness_limit=(-0.1, 0.1),
∘ contrast_limit=(-0.1, 0.1),
∘ brightness_by_max=True

This code defines a function for randomly adjusting the brightness and contrast of an image. The function has several parameters:
- always_apply: a boolean value indicating whether the function should always be applied, regardless of other conditions
- p: a float value indicating the probability of the function being applied
- brightness_limit: a tuple of two float values indicating the lower and upper bounds of the brightness adjustment, where 0.0 means no adjustment and negative/positive values mean darkening/brightening, respectively.
- contrast_limit: a tuple of two float values indicating the lower and upper bounds of the contrast adjustment, where 0.0 means no adjustment and negative/positive values mean decreasing/increasing the contrast, respectively.
- brightness _by_max: a boolean value indicating whether the brightness adjustment should be applied relative to the maximum pixel value in the image.

Multiplicative Noise function multiplies image to random number or array of numbers. This function includes the following parameters:
∘ always_apply=False,
∘ p=1.0,
∘ multiplier=(0.9, 1.1),
∘ per_channel=True,
∘ elementwise=True

This code defines a function for adding multiplicative noise to an image. The function has several parameters:
- always_apply: a boolean value indicating whether the function should always be applied, regardless of other conditions
- p: a float value indicating the probability of the function being applied
- multiplier: a tuple of two float values indicating the lower and upper bounds of the noise level, where 1.0 means no noise and values below/above 1.0 mean decreasing/increasing the noise level, respectively.
- per_channel: a boolean value indicating whether the noise should be applied separately to each color channel (R, G, B)
- elementwise: a boolean value indicating whether the noise should be applied elementwise or to the whole image.

Motion Blur function applies motion blur to the input image using a random-sized kernel. This function includes the following parameters:
∘ always_apply=False,
∘ p=1.0,
∘ blur_limit=(3, 7)

This code defines a function for adding motion blur to an image. The function has several parameters:
- always_apply: a boolean value indicating whether the function should always be applied, regardless of other conditions
- p: a float value indicating the probability of the function being applied
- blur_limit: a tuple of two integers indicating the lower and upper bounds of the blur kernel size. A larger kernel size produces more blur and simulates motion better.

Random Fog function simulates fog for the image. This function includes the following parameters:
∘ always_apply=False,
∘ p=1.0,
∘ fog_coef_lower=0.1,
∘ fog_coef_upper=0.2,
∘ alpha_coef=0.08

This code defines a function for adding random fog to an image. The function has several parameters:
- always_apply: a boolean value indicating whether the function should always be applied, regardless of other conditions
- p: a float value indicating the probability of the function being applied
- fog_coef_lower: a float value indicating the lower bound of the fog intensity coefficient. The higher the coefficient, the denser the fog.
- fog_coef_upper: a float value indicating the upper bound of the fog intensity coefficient.
- alpha_coef: a float value indicating the coefficient of the exponential decay of the fog. A higher value will make the fog thicker near the image boundaries.

The annotations are used to develop and train AI algorithms for automated analysis and diagnosis of pathology images. The annotations include labels and markers that identify specific features, structures and tissue types within the images. The annotated images are used to train and develop AI algorithms for automated analysis and diagnosis of pathology images.

The annotation process includes several steps.

Step 1 of the annotation process comprises preprocessing in which regions of interest are defined in a labeling tool. Each polygon has to belong to own category without any overlapping. Annotations are exported and tiled images are created where entire image is split as set of tiles. Each set contains 40x region of 256px*256px and 10x size 256px*256px where previous 40x region right in the middle of 10x tile. A mask is created for every tile. Each tile contains only polygons belong to single category. For example, if different categories are on the same tile then there are two different sets of tiles all other categories are wiped from this tile and replaced with white pixels.

Each training unit would contain:
-> 10x tile (containing only pixels of defined category, all others pixels are white);
-> 10x category mask;
-> 40x tile; and
-> 40x category mask.

Step 2 of annotation process includes annotation of the preprocessed images by a trained pathologist using. The annotations include labels and markers that identify specific features, structures and tissue types within the images, described further as `label categories':
- Squamous-cell carcinoma;
- Adenocarcinoma;
- Non-small cell carcinoma undefined;
- Small-cell lung cancer;
- Other malignancies/suspicious areas;
- Benign stroma;
- Benign epithelium/parenchyma;
- Necrosis/debris;
- Artefacts;
- Granuloma;
- Suspicious adenocarcinoma;
- Suspicious non-small cell carcinoma undefined;
- Suspicious small-cell lung cancer;
- Suspicious stroma;
- Suspicious epithelium/parenchyma;
- Suspicious necrosis;
- Suspicious squamous-cell carcinoma;
- Erythrocytes;
- Macrophages; and
- I do not know.

Step 3 of the annotation process includes a review and verification of the annotated images by a second pathologist or technician to ensure the accuracy and consistency of the annotations. Any discrepancies or errors are corrected before the annotated images are used for AI model development.

Step 4 of the annotation process includes AI Model Development. The annotated images are used to develop and train AI algorithms and generate inference.

Step 5 of the annotation process is a validation of dataset. A portion of the annotated images and/or regions is set aside as a validation dataset, which is used to evaluate the performance of the AI models. The validation dataset includes regions and/or that were not used for training the AI models and is therefore independent of the training dataset. The validation dataset includes annotations for the same features and structures as the training dataset, but the labels are hidden from the AI models during the evaluation process.

Step 6 of annotation process is a performance statistical evaluation. The AI models are evaluated using the validation dataset to measure their accuracy and performance. The models are trained to predict the location and size of different label categories within the pathology images. The predictions made by the models are compared to the actual labels in the validation dataset to compute various performance metrics, which are further analysed.

Step 7 of the annotation process is a performance visual evaluation. The predictions made by the model compared to the actual labels in the validation dataset and the erroneous tiles are visualized by red colour. The images with error visualization is analysed by pathologist and potential features, which could cause model error are reported. For example: presence of alveolar macrophages, which are a part of non-malignant lung tissue, is recognized by a AI model as cancer because visually can resemble cancer cells. Suggested solution: Add label category 'macrophages' and provide relevant labels for the AI model training to improve recognition of this tissue type.

Step 8 of the annotation process in an iterative improvement. Based on the performance evaluation results, the AI models are iteratively improved by adjusting the model architecture, training parameters, or other factors. The process of training, evaluating, and improving the AI models is repeated until satisfactory accuracy is achieved on the validation dataset.

The process below describes one of the embodiments of the present invention on how an AI-based system can be used to diagnose lung cancer, as well as different ways in which staff and the system can interact.
1. Acquisition of pathology images: The first step is to acquire pathology images of tissue samples from patients. The images may be obtained from various sources, including biopsy samples or tissue specimens collected during surgery.
2. Digitalization of pathology images: The pathology images are then digitized using a digital slide scanner. This process converts the physical pathology slides. The resolution of the digital images can vary depending on the scanner used and the requirements of the application. However, most digital slide scanners used for pathology imaging can produce images at a resolution of around 20x to 40x magnification, which corresponds to pixel sizes of approximately 0.5 to 0.25 micrometers. The `our solution' is developed to be used at high resolution (pixel size 0.25 micrometers) for best accuracy, but allows using lower resolution (pixel size 0.5 micrometers). Once the images are digitized, they can be stored and analyzed using AI algorithms in next step.
3. Analysis of pathology images: The digitized pathology images are then analyzed using AI algorithms, to identify and classify various features of the tissue samples, corresponding to label categories, as described above. No all categories are required for clinical needs, and some of original categories are merged:
   i. Cancer. Depending on application the following categories can be represented as different label categories or merged into one 'Cancer' category:
      ∘ Squamous-cell carcinoma;
      ∘ Adenocarcinoma;
      ∘ Non-small cell carcinoma undefined;
      ∘ Small-cell lung cancer;
      ∘ Other malignancies/suspicious areas;
   ii. Benign tissue. Depending on application the following categories can be represented as different label categories or merged into one `Benign tissue' category:
      ∘ Benign stroma;
      ∘ Benign epithelium/parenchyma;
      ∘ Erythrocytes;
   iii. Necrosis/debris etc.;
   iv. Artefacts;
   v. Macrophages;
   vi. Granuloma.
4. Integration with clinical workflow: The results of the AI analysis are integrated with the clinical workflow of the healthcare organization. This may involve integrating the results into the electronic medical records (EMR) system or other clinical decision support systems.
5. In use cases 1 and 2: The results of the AI analysis are reviewed and validated by expert who may confirm or modify the diagnosis or forward the case for the revision by pathologist expert, based on their expertise and experience.
6. Continuous improvement: The AI system is continually updated and improved (potentially supervised learning with help from pathologists) based on feedback from pathologists and healthcare professionals to improve its accuracy and effectiveness.

Overall, the deployment and use of an AI pathology system in clinical organizations involve a collaborative effort between pathologists, healthcare professionals, and AI experts to improve the accuracy and efficiency of cancer diagnosis and treatment. As result, the digital AI pathology ecosystem can be established.

The present invention also creates a Decision support workflow. In the first read use case, a pathologist examines a tissue biopsy slide under a microscope (or digitalized if available) and makes an initial diagnosis based on their observations. The AI-system is used to assist the pathologist in their diagnosis by performing tile-(pixel-)level analysis of the slide and highlighting suspicious areas for the pathologist to review. The system can also classify the cancer according to its subtypes, which helps to guide treatment decisions.

In the first read use case there is a Pathologist-specialist, specialized in lung cancer, in certain department. The slide gets scanned by technician before (or in parallel) the revision by Pathologist-specialist. The scanning is performed by regular slide scanner or by AIX-box (depending on the form-factor of the final product). The system performs the tile-level classification ("cancer" - "noncancer", cancer type) and visualizes it as heatmaps and percentages. The Pathologist-specialist evaluates the case: it can be (a) physical slide and classical microscope, or (b) scanned digitalized slide made in digitalized pathology department or (c) the slide, digitalized by AIX-box. Pathologist evaluates the slide by classical microscopy. Through the local IS system of the department, Pathologist can access the scanned and AI-annotated slide on his/her working on a computer. Pathologist uses the AI-annotated slide to help in finding the suspicions regions (pixel annotation, heatmaps) and to confirm his/her diagnosis decision. Pathologist proceed with the regular routine (for example filling the report forms etc.). Pathologist-specialist evaluates the digitalized slide using the user-interface system, established at the department ("digitalized pathology": an independent interface, used routinely in the department, denoted here as `main interface'). Through the local IT system of the department, Pathologist can access the AI-annotation for the same slide on his/her working on a computer (our interface). The annotation is NOT integrated into the main user-interface. Pathologist-specialist uses the AI-annotated slide to help in finding the suspicions regions (pixel annotation) and to confirm his/her diagnosis decision. Pathologist-specialist proceed with the regular routine (for example filling the report forms etc.). *The integration into the main user-interface system for the slide evaluation will require interaction with the software providers and may be considered as option.* Pathologist-specialist evaluates the slide scanned by AIX-box and AI-annotated, accessing it on his/her working on a computer. Pathologist-specialist uses the AI-annotated slide to help in finding the suspicions regions (pixel annotation) and to confirm his/her diagnosis decision. Pathologist-specialist may request physical slide if he/her prefers to control it with regular microscope (in case of bad quality of scanning for example). Pathologist-specialist proceed with the regular routine (for example filling the report forms etc.)

There is no Pathologist-specialist, specialized in lung cancer, in a given department, and/or there is general pathologists' shortage in a given department. The slide gets scanned by technician. The scanning is performed by regular slide scanner or by AIX-box (depending on the form-factor of the final product). The system performs the Slide-level classification ("cancer" - "noncancer", cancer type in percentages and probabilities). The technician performs the first formal evaluation of the results (system alert evaluation made, no errors, etc.), performs the transcript of the results, and transfer the AI-diagnosis to the decision-maker (in this case it can be clinician-oncologist or pathologist without specialization). Decision-maker receives the results and performs one of the following: AI-diagnosis is "non-cancer". Depending on the local regulation and clinical situation the decision-maker makes a diagnosis "non-cancer"; AI-diagnosis is "cancer". The decision-maker makes a diagnosis "cancer"; or AI-diagnosis is "cancer". The decision-maker forward the case to the Pathologist-specialist (external specialist, another department, other hospitals, etc.) for the confirmation of the diagnosis.

In the second read the department has pathologist(s) who is performing the diagnosis in the established manner (with a help digitalized pathology or by classical microscopy) according to local routine.

Right after or before the routine diagnostic step, the slide gets digitalized and AI-classification is applied. The technician compares the formalized output (not the image). If the AI-diagnosis and the diagnosis of the pathologist are equal, no actions are made. If the AI-diagnosis and the diagnosis of the pathologist differ, the case is returned to pathologist for more accurate evaluation. This process provides an added layer of review and helps to reduce the possibility of false negatives or false positives. Ultimately, the final diagnosis and treatment plan are determined by the pathologist, with the assistance of the AI system's analysis.

While the invention may be susceptible to various modifications and alternative forms, specific embodiments of which have been shown by way of example in the figures and have been described in detail herein, it should be understood that the invention is not intended to be limited to the particular forms disclosed. Rather, the invention includes all modifications, equivalents, and alternatives falling within the scope of the invention as defined by the following claims.

## Claims

1. A method for diagnosing a lung cancer, wherein the method comprises the following steps:
(a) acquisition of a pathology image of a tissue sample from a patient, wherein the tissue sample is a biopsy sample;
(b) digitalization of the pathology image by means of a digital slide scanner, wherein the digitalized image resolution is about 20x to 40x magnification, which corresponds to pixel sizes of about 0.5 to 0.25 micrometres; and
(c) analysis of the digitalized pathology image using an AI algorithm to identify and classify pathology features of the tissue samples in the digitalized pathology image.

2. The method according to Claim 1, wherein the AI algorithm is trained by means of augmentation pipeline, wherein the augmentation pipeline comprises a downscale function; a Blur transform function; elastic transform function; vertical flip function; horizontal flip function; rotate function; grid distortion function; Hue saturation value function; optical distortion function; image compression function; RGB shift function; Gauss Noise function; random brightness contrast function; multiplicative noise function; motion blur function; and random for function.
